Europäisches Patentamt

(19) **European Patent Office**

Office européen des brevets

(11) Publication number: **0 009 329**
**A2**

(12) # EUROPEAN PATENT APPLICATION

(21) Application number: **79301736.9**

(22) Date of filing: **24.08.79**

(51) Int. Cl.³: **A 01 B 1/10,** A 01 B 35/22, A 01 D 7/02

---

(30) Priority: **13.09.78 GB 3667178**

(43) Date of publication of application: **02.04.80** Bulletin 80/7

(84) Designated Contracting States: **AT BE CH DE FR GB IT LU NL SE**

(71) Applicant: **Keen, William Frederick, Plumtree House Main Sreeet, Newthorpe Nottinghamshire (GB)**

(72) Inventor: **Keen, William Frederick, Plumtree House Main Sreeet, Newthorpe Nottinghamshire (GB)**

(74) Representative: **Coxon, Philip et al, Eric Potter & Clarkson 14 Oxford Street, Nottingham NG1 5BP (GB)**

(54) **Cultivating tool.**

(57) A cultivating tool comprising a plurality of pairs of tines extending from a base, each pair of tines comprising a first tine which curves downwardly and forwardly away from the base to a first edge and a second tine which curves downwardly and rearwardly away from the base to a second edge, said first and second edges being arranged so that said second edge textends substantially to or beyond a plane perpendicular to the longitudinal axis of the base and passing through the extremity of said first edge which is most closely adjacent to said second edge.

1

## CULTIVATING TOOL.

This invention relates to cultivating tools.

Cultivating tools in the form of rakes are known and these generally comprise a base from which a plurality of spaced cylindrical raking elements project.

Several prior proposals have been made for improved rakes, for example U.S. Patent No. 1354969 describes a tool comprising a plurality of curved strips of metal in the form of hoops in use the tool is moved through the soil and the hoops serve to cut the stems of weeds but there is virtually no cultivating effect on the soil.

U.S. Patent specification No. 1998195 proposes a cultivating tool which includes a plurality of curved tines. These tines depend from a base so that when the tool is in use they act upon the soil. The shape of the tines is, however, unsuitable for providing effective cultivation of the soil as in the type B, C, and D embodiments, the tines are too widely spaced and with the type A embodiment the movement of the tines through the soil would merely provide a raking effect and not a cultivating effect. Furthermore, the cultivator described in this specification can be used in one direction only and it would not produce any cultivating effect when moved in the opposite direction.

According to the present invention I provide a cultivating tool comprising a plurality of pairs of tines extending from a base, each pair of tines comprising a first tine which curves downwardly and forwardly away from the base to a first edge and a second tine which curves downwardly and rearwardly away from the base to a second edge, said first and second edges being arranged so that said second edge extends to a position substantially adjacent to or beyond a plane perpendicular to the longitudinal axis of the base and passing through the extremity of said first edge which is most closely adjacent to said second edge.

This arrangement of tines has the advantage that as the cultivating tool is moved along the surface of the soil being cultivated, virtually all the soil is acted on as any soil which is not contacted by the first edge will be contacted by the second edge.

The cultivating tool of the invention also has the advantage that in addition to performing a normal raking operation a simultaneous cultivating effect is achieved by virtue of the shape of the tines.

The first and second edges may be inclined with respect to one another or they may be parallel to or aligned with one another.

In one embodiment of the invention the base comprises a metal plate and the tines comprise metal strips which are secured to the plate by any convenient means, such as, bolts, screws, rivets or welding. The metal is preferably stainless steel.

It will be appreciated that the tool can also be made from a plastics material and can be fabricated as described above or can be made as an integral moulding.

The cultivating tool may be provided with handle-receiving means, for example a socket or spigot such as a tubular socket or cylindrical spigot which can receive a correspondingly shaped metal, plastics or wooden rod or tube.

Reference is now made to the accompanying drawings in which :

Figure 1 is a front elevation of one form of cultivating tool according to the invention;

Figure 2 is a plan view of the tool shown in Figure 1;

Figure 3 is a perspective view of one tine shown separately from the base.

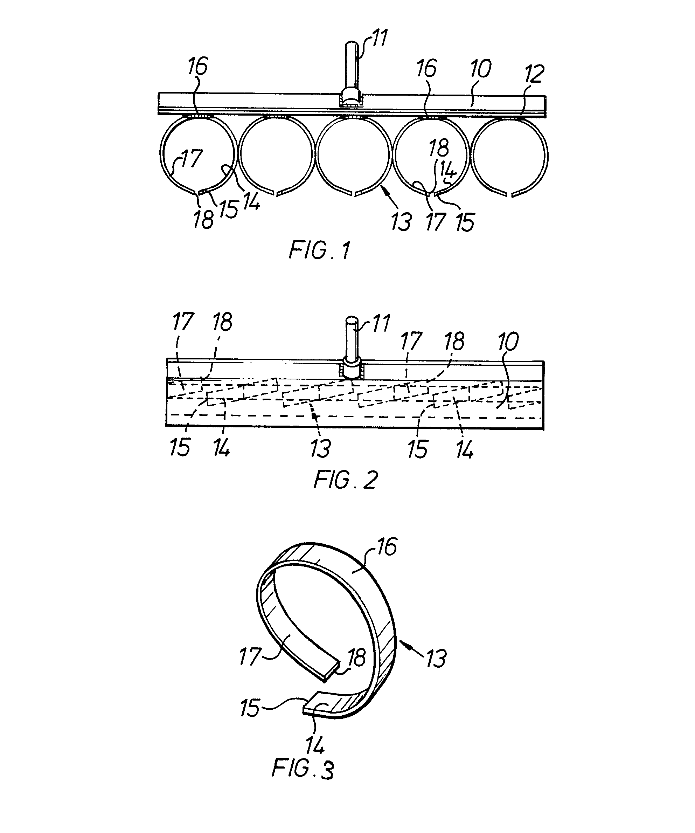

Referring to Figures 1 and 2 the cultivating tool comprises a base 10 having a cylindrical spigot 11 for receiving a tubular handle. The base 10 in this embodiment is bevelled along one side to provide a cutting edge 12.

Secured to the underside of the base are five tines 13 each of which comprises a strip of metal which is curved to the shape shown and secured to the base 10, for example by welding.

Each tine 13 curves downwardly and forwardly at 14 towards a first edge 15. A central zone 16 is secured to the base 10 and the zone 17 curves downwardly and rearwardly towards a second edge 18. As can be seen in the drawings the tines are substantially circular in elevation and the first and second edges are substantially parallel and substantially adjacent to a plane perpendicular to the longitudinal axis of the base and passing through one of said edges. The edges need not be parallel and in this case the second edge should extend to a position in which it is substantially adjacent to or beyond a plane perpendicular to the longitudinal axis of the base and passing through the extremity of the first edge which is most closely adjacent to the second edge.

The first edge 15 and/or the second edge 18 may be chamfered if desired.

The cutting edge 12 is useful for cutting weed stems and may be utilised by inverting the tool shown in the drawings and using the base 10 and cutting edge 12 in the manner of a hoe.

The cultivating tool described above has been found to be extremely effective in use since a simple raking action will also serve to remove weeds and to cultivate the surface of the soil. Furthermore, the tool is relatively simple to construct and can be readily manufactured as a robuse implement.

If desired, the tool may comprise a smaller number of tines, for example, two pairs of tines, to enable the tool to be used between closely spaced plants.

Whilst the above embodiment is intended as a hand held tool it will be apparent that the invention is also applicable to tools which are adapted to be drawn behind a towing device.

The design of the tool not only maximises tool efficiency but dramatically increases productivity when compared with conventional garden tools. When in operation the double-blade action not only allows the tool to rake but also to weed at the same time. The blade edges work in tandem to provide a highly efficient raking and cultivating action and the arrangement is such that, regardless of which direction the tool is moved along the soil surface, it is acted upon either by the first edge or the second edge, which will pull up and cut down weeds.

CLAIMS.

1. A cultivating tool comprising a plurality of pairs of tines extending from a base, each pair of tines comprising a first tine which curves downwardly and forwardly away from the base to a first edge and a second tine which curves downwardly and rearwardly away from the base to a second edge, said first and second edges being arranged so that said second edge extends substantially to or beyond a plane perpendicular to the longitudinal axis of the base and passing through the extremity of said first edge which is most closely adjacent to said second edge.

2. A cultivating tool according to claim 1 in which each pair of tines comprises a single strip which is secured at its mid-portion to the base.

3. A cultivating tool according to claim 1 or 2 in which the first and second edges are inclined with respect to one another.

4. A cultivating tool according to claim 1 or 2 in which the first and second edges are parallel to or aligned with one another.

5. A cultivating tool according to any of claims 1 to 4 in which the tines are secured to the base by means of rivets.

6. A cultivating tool according to any of claims 1 to 4 in which the tines are welded to the base.

7. A cultivating tool according to any of claims 1 to 6 in which the base and/or the tines are made from metal.

8. A cultivating tool according to claim 7 in which the metal is stainless steel.

9. A cultivating tool according to any of claims 1 to 6 in which the base and/or the tines are made from plastics material.

10. A cultivating tool according to any of claims 1 to 9 in which the base is provided with handle receiving means.

0009329

−1/1−

FIG.1

FIG.2

FIG.3